# EUROPÄISCHE PATENTANMELDUNG

(11) **EP 1 095 849 A2**
(43) Veröffentlichungstag der Anmeldung: **02.05.2001**
(21) Anmeldenummer: 00120193.8
(22) Anmeldetag: 22.09.2000
(51) Int. Cl.: B63H 23/30, F16F 15/131

(54) **Vorrichtung zum Übertragen von Drehmomenten im Antriebsstrang von Wasserfahrzeugen, vorzugsweise mit Verbrennungsmotor**

(30) Priorität: 29.10.1999 DE 19952233
(71) Anmelder: Volkswagen Aktiengesellschaft, 38436 Wolfsburg (DE)
(72) Erfinder: Bader, Thomas, 38300 Wolfenbüttel (DE)

(57) **Zusammenfassung**

Die Erfindung betrifft eine Vorrichtung zum Übertragen von Drehmomenten im Antriebsstrang von Wasserfahrzeugen, vorzugsweise mit Verbrennungsmotoren.
Durch einerseits vom Motor (1) und andererseits von der Abtriebsseite, durch Rudereinwirkungen und Blattschlagen herrührende Drehmomentschwankungen führen vor allem durch die bei Antrieben von Wasserfahrzeugen typische niedrige Drehzahl zu starken Vibrationen im Schiffsrumpf und zu Geräuschentwicklung. Aufgabe der Erfindung ist es, die im Antriebsstrang von Wasserfahrzeugen auftretenden Drehschwingungen zu dämpfen, um damit einen geräusch- und vibrationsarmen Fahrbetrieb zu gewährleisten.
Die erfindungsgemäße Vorrichtung besteht aus einer motorseitigen Primärschwungmasse (7), einer an den Abtrieb (4) zu einem den Schiffspropeller treibenden Getriebe (5) gekoppelten Sekundärschwungmasse (9) sowie einer zwischen diese geschaltete drehelastische Verbindung (13; 10). Den speziellen Anforderungen im Antriebsstrang von Wasserfahrzeugen wird durch eine abtriebsseitig an die Welle (4) gekoppelte Sekundärschwungmasse (9) sehr hoher Massenträgheit sowie einen, durch die Gestaltung der elastischen Kopplung möglichen, hohen Verdrehwinkel zwischen Primär- und Sekundärschwungmasse (7; 9) entsprochen. Die Erfindung ermöglicht die Verwendung eines modifizierten, aus dem Automobilbau bekannten und in Großserien eingesetzten Zweimassenschwungrades (3).

## Beschreibung

Die Erfindung betrifft eine Vorrichtung zum Übertragen von Drehmomenten im Antriebsstrang von Wasserfahrzeugen nach dem Oberbegriff des Patentanspruches 1.

Vorbekannt ist aus der Schrift DE 39 15 527 A1 ist ein Torsionsdämpfer für ein Bootsgetriebe, der ein primäres, motorseitiges Schwungrad und ein elastisch angekoppeltes, als Nabe ausgebildetes Sekundärteil umfaßt, das starr mit dem Schiffsgetriebe verbunden ist. Die Ankopplung gestattet ein relatives Verdrehen des Schwungrades gegenüber dem, mit dem Schiffsgetriebe gekoppelten Sekundärteil. Im Schwungrad angeordnete und zum Außendurchmesser hin axial gegen dieses abgestützte Federn wirken auf Gleitelemente, die sich an, auf der äußere Nabenkontur ausgebildeten, geneigten Ebenen abstützen. Zum Dämpfen der Schwingungen ist eine zwischen Schwungrad und Sekundärteil wirkende Reibscheibe vorhanden. Der Torsionsschwingungsdämpfer weist konstruktionsbedingt einen Verdrehwinkel kleiner 45° zwischen Schwungrad und Sekundärteil auf. Bis zum Anlegen an Endlagendämpfer wird der Relativverdrehung zwischen Schwungrad und Sekundärteil nur ein geringer Widerstand entgegengesetzt.

Weiterhin ist aus der Schrift DE 43 09 745 A1 eine elastische Wellenkupplung für Bootsmotoren bekannt, die im wesentlichen der bekannten Gummirollenkupplungen gleicht. In Zwischenräumen zwischen Kupplungsflansch und einer Nabe sind, zum Übertragen von Drehmomenten, elastisch verformbare Formkörper angeordnet. Abtriebsseitig ist auf dem Kupplungsflansch ein fest mit der Nabe gekoppeltes Kraftübertragungsglied angeordnet, dessen umfangsverteilte Klauen in Ausnehmungen des Kupplungsflansches eingreifen. Für diese Kupplung wird in der Schrift empfohlen, das abtriebsseitige Kraftübertragungsglied über seine notwendige Festigkeit hinaus, zum Bilden einer Schwungmasse, zu dimensionieren.

Die für Schiffsantriebe vorbekannten gattungsgemäßen drehelastischen Kupplungen zum Dämpfen der Drehschwingungen gestatten nur geringe Verdrehwinkel zwischen dem Motor und dem nachgeschalteten Getriebe. Die Dämpfung der Drehschwingungen ist für diese vorbekannten Lösungen nicht zufriedenstellend. Dies zeigt sich besonders bei den schiffstypischen niedrigen Drehzahlen der Motoren, z.B. bei Hafenmanövern oder Schleusungen. Es treten deutlich spürbare Vibrationen im Schiffskörper und hohe Fahrgeräusche auf. Bei Propellerantrieben für Wasserfahrzeuge treten, zusätzlich zu den vom Antrieb verursachten, vom Schiffspropeller herrrührende Torsionsschwingungen auf. Sie entstehen durch hydrodynamische Veränderungen beim Durchgang eines Schiffspropellerblattes im Bereich des angrenzenden Schiffsrumpfes. Das dabei auftretende geringere Drehmoment am Schiffspropeller erzeugt drehzahlabhängige Torsionsschwingungen, die als 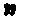 Blattschlagen 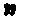 bekannt sind. Desweiteren tragen auch Einwirkungen aus der Ruderstellung zum Schwanken des Drehmomentes am Abtrieb bei. Die im Stand der Technik gewürdigte Schrift DE 39 15 527 A1 erwähnt die Möglichkeit hydraulisch gedämpfte Zweimassenschwungräder als Schwingungstilger einzusetzen. Ihr Einsatz wird jedoch als zu kostspielig und aufwendig erachtet.
Weiterhin ist es bereits vorbekannt, für die Wellenkupplung nach DE 43 09 745 A1 ein abtriebsseitig angeordnetes Kraftübertragungsglied mit erhöhtem Massenträgheitsmoment zu dimensionieren.

Eine speziell auf die Verhältnisse im Antriebsstrang von Wasserfahrzeugen abgestimmte, zwischen Motor und Getriebe angeordnet, baulich von der Kupplung getrennte Vorrichtung zum Übertragen von Drehmomenten, die eine abtriebsseitig elastisch angekoppelte Schwungmasse hoher Massenträgheit aufweist, welche einen hohen Verdrehwinkel zwischen der antriebs- und abtriebsseitigen Schwungmasse bei gleichzeitig hoher Dämpfung zuläßt, ist im Stand der Technik nicht beschrieben.

Der Erfindung liegt die Aufgabe zugrunde, eine Vorrichtung zum Übertragen von Drehmomenten für Antriebe von Wasserfahrzeugen zu schaffen, die - bei diesen typische - Drehschwingungen im Antriebsstrang dämpft und den Einsatz von im Automobilbau in der Serienfertigung verwandten und für diesen Einsatz angepaßten Bauteilen ermöglicht.

Diese Aufgabe wird bei gattungsgemäßen Vorrichtungen erfindungsgemäß durch die kennzeichnenden Merkmale des Patentanspruchs 1 gelöst.

Die erfindungsgemäße Vorrichtung zum Übertragen von Drehmomenten im Antriebsstrang von Wasserfahrzeugen, die vorzugsweise von Verbrennungsmotoren angetrieben werden, weist eine auf der Kurbelwelle angeordnete erste Schwungmasse und eine fest an den Wellenstrang des Schiffsantriebs gekoppelte zweite Schwungmasse auf. Die erste und zweite Schwungmasse sind drehelastisch miteinander verbunden. Über die Parameter der Steifigkeit der elastischen Verbindung, deren Dämpfung und die angekoppelten Schwungmassen ist das Übertragungsverhalten der erfindungsgemäßen Vorrichtung optimal zur Dämpfung von Torsionsschwingungen einstellbar. Der erfindungsgemäß entscheidende Schritt ist eine zweite Schwungmasse hoher Massenträgheit auf der Abtriebsseite der Vorrichtung anzuordnen und einen hohen Verdrehwinkel zwischen erster und zweiter Schwungmasse zuzulassen. Die zweite Schwungmasse ist gegenüber den im Automobilbereichen verwandten Schwungmassen, minimal um den Faktor 2, größer dimensioniert. Drehschwingungen, die aus Drehmomentschwankungen des Motors sowie aus Rückwirkungen vom Abtrieb herrühren, werden wirkungsvoll gedämpft. Vibrationen und Geräusche werden bereits ab Startdrehzahl gedämpft. Getrieberasseln tritt in nahezu allen Drehzahlbereichen nicht mehr auf. Durch Vermindern der Drehungleichförmigkeiten wird der gesamte Antriebsstrang mechanisch geringer belastet, was zu einer erhöhten Lebensdauer führt. Ein weiterer Vorteil der erfindungsgemäßen Vorrichtung ist, daß durch Entfallen des Torsionsschwingungsdämpfers an der Kupplungsscheibe sich das Getriebe aufgrund geringerer zu synchronisierender Massen leichter schalten läßt.
Neben einem hohen Antriebs- und Schaltkomfort kann durch niedrigeren Verschleiß und Verwenden von in der Automobilindustrie in Großserie eingeführten Bauteilen eine Kosteneinsparung erreicht werden.

Weitere Einzelheiten der Erfindung werden in der Zeichnung anhand von schematisch dargestellten Ausführungsbeispielen beschrieben.

Hierbei zeigt:
Figur 1 eine Prinzipdarstellung der erfindungsgemäßen Vorrichtung,
Figur 2 eine mögliche Ausführungsform der erfindungsgemäßen Vorrichtung in einem Teilschnitt.

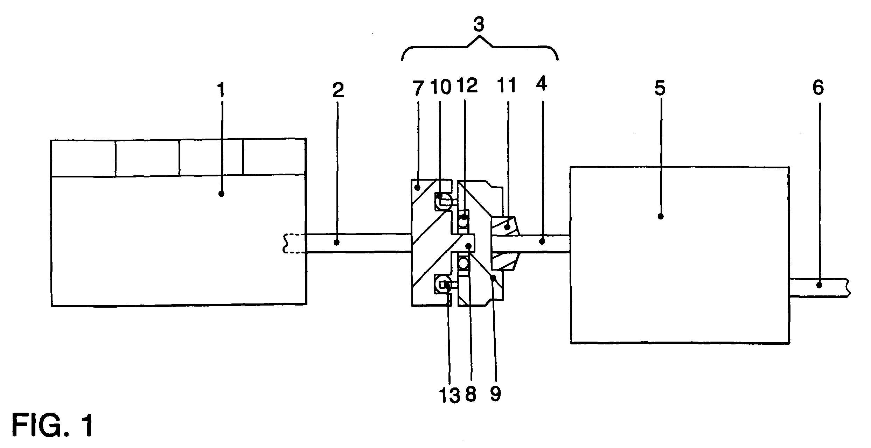

In Fig. 1 ist die erfindungsgemäße Vorrichtung in einer Prinzipdarstellung gezeigt. Zwischen der Kurbelwelle 2 eines Schiffsmotors 1 und einer zu dessen Getriebe 5 führenden Abtriebswelle 4 ist eine Vorrichtung zum Übertragen von Drehmomenten zwischengeschalten. Diese ist als ein an sich aus dem Automobilbau bekanntes Zweimassenschwungrad 3 ausgebildet. Abtriebsseitig weist das Getriebe 5 eine Antriebswelle 6 mit einem Schiffspropellerantrieb - nicht dargestellt ― auf.
Das Zweimassenschwungrad 3 besteht aus einer fest mit der Kurbelwelle 2 des Motors 1 gekoppelten Primärschwungmasse 7 und einer mittels eines Kugellagers 12 drehbar auf deren Nabe 7 gelagerten Sekundärschwungmasse 9. Die Primärschwungmasse 7 trägt umfangsverteilt Federn 10, welche vorzugsweise als Druckfedern ausgebildet sind. In diese greifen, starr mit der Sekundärschwungmasse 9 verbundene, Koppelelemente 13 ein, welche damit unter Zwischenschalten der Federn 10 gegen die Primärschwungmasse 7 abgestützt sind.
Es erfolgt eine Kraftübertragung von der Kurbelwelle 2 zur Primärschwungmasse 7 und über die darin gehaltenen Federn 10 weiter zu den an der Sekundärschwungmasse 9 fest angeordneten Koppelelementen 13 und damit zur Sekundärschwungmasse 9. An dieser befindet sich ein auswechselbar angekoppelter Wellenadapter 11, über den die Kräfte weiter, auf die das Getriebe treibende Welle 4 übertragen werden. Über den Wellenadapter 11 ist die Anpassung der Verbindung zwischen Sekundärschwungmasse 9 und der Welle 4 des Getriebes 5 einfach gelöst.

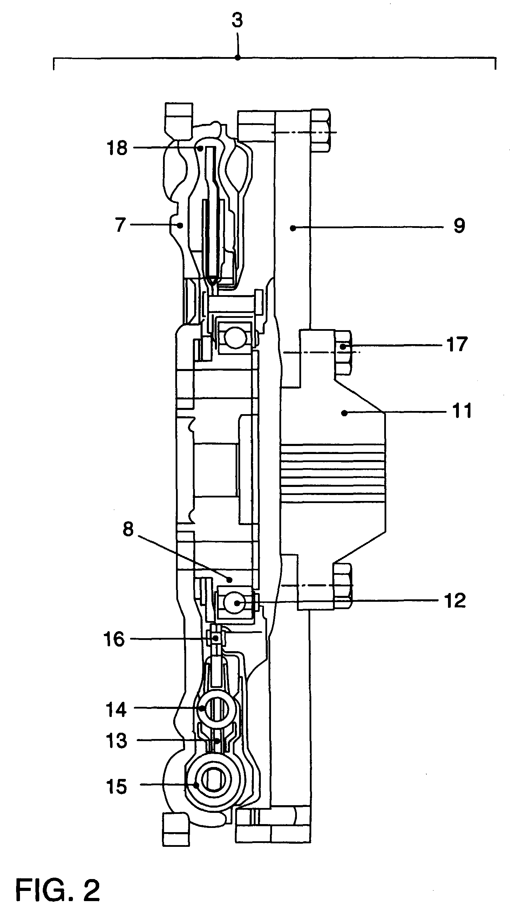

In Fig. 2 ist eine mögliche Ausführungsform der erfindungsgemäßen Vorrichtung in einem Teilschnitt dargestellt. Die Darstellung zeigt ein, an sich aus dem Automobilbau bekanntes, Zweimassenschwungrad 3 mit einer, speziell für den Einsatz im Antriebsstrang von Wasserfahrzeugen gestalteten Sekundärschwungmasse 9 und einen hohen Verdrehwinkel zwischen den Schwungmassen.
Auf der Nabe 8 der Primärschwungmasse 7 ist mittels eines Kugellagers 12 die Sekundärschwungmasse 8 drehbar gelagert. Über Verbindungselemente 16 ist ein Koppelelement 13 fest mit der Sekundärschwungmasse 9 verbunden. Die Koppelelemente 13 greifen in die umfangsverteilten Federelemente 14 und 15, welche in der Primärschwungmasse 7 gehalten und radial gegen diese abgestützt sind. Ein Wellenadapter 11 ist zentrisch über Verbindungsemente 17 an der Sekundärschwungmasse 9 auswechselbar angeordnet. Er dient zum Ankoppeln der zum Getriebe 5 führenden Welle 4 - siehe Fig. 1 -.

### BEZUGSZEICHENLISTE

- 1: Schiffsmotor
- 2: Kurbelwelle
- 3: Zweimassenschwungrad
- 4: Welle
- 5: Getriebe
- 6: Abtriebswelle
- 7: Primärschwungmasse
- 8: Nabe
- 9: Sekundärschwungmasse
- 10: Feder
- 11: Wellenadapter
- 12: Kugellager
- 13: Koppelelement
- 14: Federpackung
- 15: Federpackung
- 16: Verbindungselement
- 17: Verbindungselement
- 18: Fettpackung

## Patentansprüche

1. Vorrichtung zum Übertragen von Drehmomenten im Antriebsstrang von Wasserfahrzeugen, vorzugsweise mit Verbrennungsmotoren, wobei zwischen der motorseitigen Primärschwungmasse und einem angekoppelten Abtrieb zu einem Getriebe, zum Antreiben eines Schiffspropellers, eine drehelastische Verbindung zwischengeschaltet ist
**dadurch gekennzeichnet,**
daß die drehelastische Verbindung auf der Seite ihres Abtriebes eine Sekundärschwungmasse (9) aufweist.

2. Vorrichtung nach Anspruch 1
**dadurch gekennzeichnet,**
daß die drehelastische Verbindung eine speziell für den Einsatz am Schiffsantrieb dimensionierte Sekundärschwungmasse eine, gegenüber den Antriebssträngen im Automobil, minimal um den Faktor 2 höhere Masse aufweist.

3. Vorrichtung nach Anspruch 1 o. 2
**dadurch gekennzeichnet,**
daß die Primärschwungmasse (7) des Motors (1), die drehelastische Verbindung und die Sekundärschwungmasse (9) durch ein an sich bekanntes Zweimassenschwungrad (3) gebildet wird.

4. Vorrichtung nach einem der vorherigen Ansprüche 1 o. 2
**dadurch gekennzeichnet,**
daß die drehelastische Verbindung zwischen der Primärschwungmasse (7) und der Sekundärschwungmasse (9) hohe Verdrehwinkel >30° zuläßt.

5. Vorrichtung nach Anspruch 1 o. 2
**dadurch gekennzeichnet,**
daß an der Sekundärschwungmasse (9) zentrisch ein auswechselbarer Wellenadapter (11) zum Ankoppeln einer Abtriebswelle (6) des Schiffsantriebs angeordnet ist.
